# EUROPÄISCHE PATENTSCHRIFT

(11) **EP 3 126 705 B1**
(45) Veröffentlichungstag und Bekanntmachung des Hinweises auf die Patenterteilung: **07.06.2023**
(21) Anmeldenummer: 15741887.2
(22) Anmeldetag: 01.04.2015
(51) Int. Cl.: F16F 7/108

(54) **SCHWINGUNGSTILGER FÜR EINEN FAHRZEUGSITZ, FAHRZEUGSITZ UND KRAFTFAHRZEUG**
TUNED MASS DAMPER FOR A VEHICLE SEAT, VEHICLE SEAT, AND MOTOR VEHICLE
AMORTISEUR À MASSE ACCORDÉE POUR SIÈGE DE VÉHICULE, SIÈGE DE VÉHICULE ET VÉHICULE À MOTEUR

(30) Priorität: 02.04.2014 DE 102014206232
(43) Veröffentlichungstag der Anmeldung: 08.02.2017
(73) Patentinhaber: Volkswagen Aktiengesellschaft, 38440 Wolfsburg (DE)
(72) Erfinder: ZLATKOV, Branislav, 38104 Braunschweig (DE); RAFFEL, Knut, 38102 Braunschweig (DE); KLOSE, Ansgar, 38110 Braunschweig (DE); TITZE, Sven, 38106 Braunschweig (DE); KONDO, Kossi, 38547 Calberlah (DE)
(86) Internationale Anmeldenummer: PCT/EP2015/057141
(87) Internationale Veröffentlichungsnummer: WO 2015/150437

(56) Entgegenhaltungen:
- DE-A1- 10 327 770
- US-A1- 2002 144 873
- US-A1- 2012 043 171

## Beschreibung

Die Erfindung betrifft einen Schwingungstilger für einen Fahrzeugsitz, einen Fahrzeugsitz und ein Kraftfahrzeug.

Die Schwingungstilger oder Vorrichtungen zur Reduzierung von Schwingungen können in der Abhängigkeit vom Einsatz auch als Schwingungsdämpfer benutzt werden und werden häufig in sich bewegenden technischen Baugruppen eingesetzt. Im Allgemeinen bezeichnet man die Schwingungstilger als besondere Art eines Schwingungsdämpfers. Die Reduzierung von Schwingungen soll die Kinematik verbessern oder beispielsweise in Sitzen von Fahrzeugen durch die Schwingungsreduzierung den Komfort der Passagiere erhöhen. Dazu können ein oder mehrere Schwingungstilger beispielsweise in einer Rückenlehne oder in einem Sitzteil eines Fahrzeugsitzes angeordnet sein.

EP 1 303 710 B1 offenbart einen Schwingungsdämpfer mit einer Masse, welche mit vier Elastomerelementen symmetrisch an einem Befestigungselement angebunden ist, welches zur Befestigung an beispielsweise einem Sitz dient. Die Elastomerelemente weisen innen Hohlräume auf, in welche Abstimmkerne eingeführt werden können, um den erwünschten Frequenzbereich einzustellen. Der Schwingungsdämpfer schwingt dann in seinem Resonanzbereich der anregenden Schwingung entgegen, was eine Pegelreduzierung zum Beispiel der Schwingung der Rückenlehne hervorruft.

Bekannt sind zudem die Druckschriften US 2012/0043171 A1, US 2002/0144873 A1 und DE 103 27 770 A1, die weitere herkömmliche Schwingungsdämpfer offenbaren.

Der Erfindung liegt nun die Aufgabe zugrunde, die komfortrelevanten Schwingungen für einen Fahrzeugsitz zu verbessern.

Diese Aufgabe wird gelöst mit einem Schwingungstilger gemäß Anspruch 1, einem Fahrzeugsitz nach Anspruch 7 beziehungsweise einem Kraftfahrzeug nach Anspruch 8.

Der erfindungsgemäße Schwingungstilger für einen Fahrzeugsitz mit einer Schwingungsmasse und mit mehreren die Schwingungsmasse tragenden, elastischen Dämpfungselementen, welche in Öffnungen der Schwingungsmasse angeordnet sind, umfasst, dass die Dämpfungselemente massiv sind, wobei der Ausgangspunkt der Erfindung Schwingungstilger für einen Fahrzeugsitz mit einer Schwingungsmasse mit mehreren massiv ausgebildeten die Schwingungsmasse tragenden, elastischen Dämpfungselementen sind, deren Grundkörper in einem befestigten Zustand an den einen Enden mit einem Eingriffsbereich versehen sind, die in Öffnungen der Schwingungsmasse eingreifen und mit ihren anderen von der Schwingungsmasse beabstandeten Enden mit einem Befestigungsbereich versehen sind, wobei die Befestigungsbereiche in einem befestigten Zustand mit einer Struktur des Fahrzeugsitzes in Verbindung stehen oder mit einem mit der Struktur des Fahrzeugsitzes in Verbindung stehenden Gehäuse in Verbindung stehen.

Vorgesehen ist erfindungsgemäß, dass die Befestigungsbereiche der Dämpfungselemente mit ihren anderen von der Schwingungsmasse beabstandeten Enden als Fußteile ausgebildet sind, die im befestigten Zustand in Aufnahmen in der Struktur des Fahrzeugsitzes oder in Aufnahmen des mit der Struktur des Fahrzeugsitzes in Verbindung stehenden Gehäuses eingeschoben sind, während die Eingriffsbereiche als Vorsprung ausgebildet sind, die in die mit einem Hinterschnitt versehenen Öffnungen der Schwingungsmasse eingreifen, wobei sich an die Eingriffsbereiche ein Flansch anschließt, die an den Grundkörper angeformt sind, wobei die Flansche an den Kontaktflächen zwischen dem Dämpfungselement und der Schwingungsmasse Anbindungsflächen bilden.

Der erfindungsgemäße Schwingungstilger hat den Vorteil, dass die massiven, also aus vollem Material bestehenden, Dämpfungselemente oder Federn eine robustere Anbindung der Schwingungsmasse bzw. des Tilgerkörpers erlauben. Insgesamt ist ein einfacherer Aufbau möglich. Die Schwingungsmasse oder der Schwingkörper ist eine Tilgermasse, deren Arbeitsfrequenz auf die jeweilige Anwendung abgestimmt ist. Die Tilgermasse ist dermaßen ausgelegt, dass sie durch eine eigene Arbeitsfrequenz die komplexeren Schwingungen in allen drei Bewegungsachsen dämpfen kann.

In bevorzugter Ausgestaltung der Erfindung ist vorgesehen, dass vier Dämpfungselemente vorgesehen sind und dass vier Öffnungen paarweise gegenüberliegend an den Schmalseiten der Schwingungsmasse angeordnet sind. Durch die Verwendung von vier Dämpfungselementen und entsprechend vier Öffnungen, die an schmalen Seiten der Schwingungsmasse angeordnet sind, wird die Schwingungsmasse robust gehalten und es sind Schwingungen der Schwingungsmasse und damit Reduktionen bzw. Tilgungen von Schwingungen in allen drei Achsen möglich.

Alternativ ist vorgesehen, dass zwei Dämpfungselemente vorgesehen sind und dass zwei den Schwingungsmasse durchdringende Öffnungen vorgesehen sind. In dieser Variante sind zwei Durchgangsöffnungen vorgesehen, welche an den gleichen Stellen wie die vier Öffnungen angeordnet sein können. Je nach Herstellungsprozess kann es einfacher sein, lediglich zwei Durchgangsöffnungen vorzusehen. Die beiden Dämpfungselemente erstrecken sich dann jeweils von einer Seite der Schwingungsmasse bis zu der gegenüberliegenden Seite der Schwingungsmasse. Dabei verlaufen die Dämpfungselemente jeweils vollständig durch die durchdringenden Öffnungen. Die Dämpfungselemente können eine Länge und Ausgestaltung derart aufweisen, dass sie mit der Schwingungsmasse eine Passung eingehen. Dadurch wird die Schwingungsmasse in einer Art Presssitz zwischen den Dämpfungselementen fixiert. Dies erlaubt eine einfache, aber robuste Befestigung der Schwingungsmasse und eine gute Schwingungsübertragung. In einer weiteren Alternative sind zwei Dämpfungselemente vorgesehen, die zum Beispiel jeweils mittig auf einer Seite angeordnet sind.

Der Flansch an der Kontaktfläche zwischen Dämpfungselement und der Schwingungsmasse bietet eine größere Anbindungsfläche, was zum einen die Robustheit der Verbindung erhöht und zum anderen zu einer besseren Schwingungsübertragung führt. Durch eine Anpassung der Höhe oder Dicke des Flansches, die beispielsweise im Bereich von Zehntelmillimetern bis Millimetern, insbesondere im Bereich von 0,5 bis 5 mm liegen kann, kann die Steifigkeit und damit das Schwingungsverhalten des Dämpfungselementes eingestellt werden. Durch einen vergrößerten Flanschdurchmesser kann ein direkter Anschlag der Tilgermasse an ein Kunststoffgehäuse verhindert werden, was akustisch von großer Bedeutung ist.

Besonders vorteilhaft ist, dass die von der Schwingungsmasse beabstandeten Enden der Dämpfungselemente an einem Gehäuse des Schwingungsdämpfers befestigt sind.

Der Schwingungstilger ist mit oder ohne Gehäuse konfigurierbar.

In der Variante ohne Gehäuse werden die Dämpfungselemente direkt an einer Tragstruktur, wie zum Beispiel einer Sitztragstruktur eines Fahrzeugsitzes, angebunden. Dies kann beispielsweise durch Formschluss, Kleben oder Verschrauben etc. geschehen. Bei der Variante mit Gehäuse verbinden die Dämpfungselemente das Gehäuse mit der Tilgermasse. Hier kann das Gehäuse eine Adapterfunktion übernehmen, das heißt der Schwingungstilger wird über das Gehäuse an einer tragenden Struktur befestigt.

Die Schwingungsmasse oder die Schwingungsmasse und die Dämpfungselemente können einstückig, ausgebildet sein; ebenso können auch die Dämpfungselemente und das Gehäuse, falls aus Kunststoff hergestellt, einstückig ausgebildet sein. Eine einstückige Tilgermasse bzw. eine einstückige Schwingungsmasse vereinfacht die Herstellung wesentlich. Die Schwingungsmasse kann beispielsweise durch verschiedene Fertigungstechniken, wie Gießen, Schmieden, Pressen/ Sintern, PIM-Verfahren (Powder-Injection-Molding, Pulverspritzgießen), Schneiden und weitere Herstellungsverfahren hergestellt werden. Die einstückige Ausbildung von Schwingungsmasse und Dämpfungselementen führt zu einem robusten und Schwingungen sehr gut übertragenden Aufbau. Das Gehäuse der Schwingungsmasse und die Dämpfungselemente können beispielsweise in einem 2K-Spritzgießverfahren hergestellt werden. Dabei können entweder zunächst die Dämpfungselemente gespritzt werden und anschließend das Gehäuse der Schwingungsmasse. Auch eine umgekehrte Vorgehensweise ist möglich, dann wäre es möglich, separat eingelegte Dämpfungselemente in einem Spritzgießwerkzeug zu umspritzen, wodurch dann das Gehäuse der Schwingungsmasse geformt wird. Bei beiden Varianten ist gewährleistet, dass die Dämpfungselemente fest an dem Gehäuse abgebunden werden. Bei den Dämpfungselementen kann es sich um extrudierte oder gespritzte Teile handeln, die hauptsächlich aus einem Polymer, wie einem Thermoplast, Elastomer oder thermoplastischen Elastomeren, bestehen. Abhängig von den Polymertypen ist eine entsprechende weitere Behandlung, wie zum Beispiel Vulkanisieren oder Tempern, möglich. Die Verbindung zwischen den Dämpfungselementen und der Schwingungsmasse kann auch durch einen Verschluss oder einen Klebeprozess an den Kontaktflächen zwischen der Schwingungsmasse und dem jeweiligen Dämpfungselement realisiert werden.

Alternativ kann vorgesehen sein, dass die Schwingungsmasse mehrteilig ausgebildet ist, wobei die Öffnungen im Bereich von Übergängen von Teilen der Schwingungsmasse angeordnet sind. Die mehrteilige Schwingungsmasse, die vorzugsweise zwei oder drei Teile aufweist, kann nun getrennt von den Dämpfungselementen hergestellt werden, so dass kein Umspritzen der Elastomerfeder an die Schwingungsmasse notwendig ist, was die Herstellungskosten senken kann. Mit einer mehrteiligen Schwingungsmasse können die Dämpfungselemente einfach in die geöffneten Öffnungen eingelegt werden und anschließend durch Zusammenfügen der Schwingungsmasse fixiert werden. Die einzelnen Teile der Schwingungsmasse können zum Beispiel verschraubt, verklebt oder verschweißt werden. Eine mechanische Anbindung mittels Einpressens ist auch denkbar.

Vorzugsweise ist vorgesehen, dass die Schwingungsmasse und die Dämpfungselemente mittels einer Pressverbindung verbunden sind. Mittels der Pressverbindung werden die Dämpfungselemente in der Schwingungsmasse eingepresst. Dazu können die Öffnungen und/oder die Dämpfungselemente Querschnittsänderungen wie zum Beispiel Hinterschnitte oder Vorsprünge aufweisen, um eine feste Verbindung zu garantieren.

Der erfindungsgemäße Fahrzeugsitz mit einer Sitztragstruktur umfasst einen Schwingungstilger wie zuvor beschrieben, der mit der Sitztragstruktur verbunden ist. Es gelten die gleichen Vorteile und Modifikationen. Statt einem Fahrzeugsitz kann auch eine Fahrzeugsitzstruktur, dass heißt ohne Polsterung, betrachtet werden. Der Schwingungstilger kann an einer beliebigen Position in einem Sitzteil bzw. einer Sitzlehne des Fahrzeugsitzes verbaut werden. Der Begriff Fahrzeuge umfasst hier Kraftfahrzeuge, wie zum Beispiel Pkw's, Lkw's, Busse oder Landwirtschaftsfahrzeuge wie Traktoren, Schienenfahrzeuge, wie zum Beispiel Züge, Straßenbahnen oder U-Bahnen, sowie Schiffe und Flugzeuge. Der Einsatz des Schwingungstilgers ist jedoch nicht auf Kraftfahrzeuge beschränkt. Der Schwingungstilger kann in jedem technischen Gerät, welches eine Dämpfung von Schwingungen benötigt, eingesetzt werden. Dies können zum Beispiel Werkzeugmaschinen sein.

Das erfindungsgemäße Kraftfahrzeug umfasst mindestens einen Sitz und/oder einen Schwingungstilger wie zuvor beschrieben. Es gelten die gleichen Vorteile und Modifikationen.

Die Erfindung wird nachfolgend in Ausführungsbeispielen anhand der zugehörigen Zeichnungen erläutert. Es zeigen:
- Figur 1: eine perspektivische Darstellung eines Schwingungstilger in einem Gehäuse
- Figur 2: eine perspektivische Darstellung eines Dämpfungselements des Schwingungstilgers;
- Figur 3: Darstellungen von diversen Querschnitten des Dämpfungselements;
- Figur 4: eine perspektivische Darstellung eines weiteren Schwingungstilger;
- Figur 5: eine perspektivische Darstellung eines weiteren Schwingungstilger;
- Figur 6: eine perspektivische Darstellung eines weiteren Schwingungstilger; und
- Figur 7: eine perspektivische Darstellung eines weiteren Schwingungstilgers.

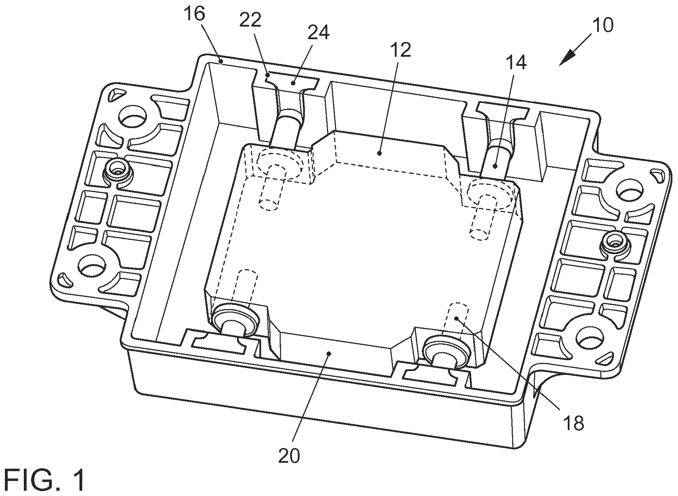

Figur 1 zeigt einen Schwingungstilger 10, der zum Dämpfen oder Unterdrücken von unerwünschten Schwingungen verwendet wird. Der Schwingungstilger 10 kann beispielsweise in einem Fahrzeugsitz verwendet werden. Der Schwingungstilger 10 umfasst eine Schwingungsmasse 12 sowie vier elastische Dämpfungselemente 14, welche die Schwingungsmasse 12 tragen und mit einem Gehäuse 16 des Schwingungstilgers 10 verbinden. Das Gehäuse 16 des Schwingungstilgers wird an einer Struktur, beispielsweise eines Fahrzeugsitzes befestigt. Die Befestigung kann durch Verschrauben, Kleben, Nieten oder Ähnliches realisiert sein.

Die Schwingungsmasse 12 ist aus Gründen der Übersichtlichkeit transparent dargestellt, so dass Öffnungen der Schwingungsmasse 12 an dessen Schmalseiten 20 zur Aufnahme von Teilen der Dämpfungselemente 14 erkennbar sind. Die Schwingungsmasse 12 besteht in diesem Ausführungsbeispiel aus einem einstückigen Massekörper, der eine flache Form aufweist. Über das Gewicht, das Material und/oder die Form der Schwingungsmasse 12 wird die eigene Arbeitsfrequenz zur Dämpfung auch komplexer Schwingungen in drei Dimensionen oder Bewegungsachsen eingestellt. Die vier Öffnungen sind paarweise gegenüberliegend an den Schmalseiten 20 der Schwingungsmasse 12 angeordnet. Wenn die Schwingungsmasse 12 wie hier dargestellt eine im Wesentlichen rechteckige Grundform aufweist, sind die Öffnungen 18 vorzugsweise an den längeren Schmalseiten 20 der Schwingungsmasse 12 angeordnet. Die Grundfläche der Schwingungsmasse 12 ist nicht exakt rechteckig ausgebildet, vielmehr befinden sich an den längeren Schmalseiten 20 zwischen den Öffnungen 18 Vorsprünge, die sich in Richtung des Gehäuses 16 erstrecken.

In dem hier dargestellten Beispiel sind die Dämpfungselemente 14 entweder mit der Schwingungsmasse 12 verklebt, wobei als Kontaktflächen für den Klebevorgang Teile oder der gesamte Bereich der Öffnungen 18 und/oder der Kontaktbereich zwischen dem Dämpfungselement 14 und der Schwingungsmasse 12 an der Schmalseite 20 verwendet werden. Alternativ können die Dämpfungselemente 14 und die Schwingungsmasse 12 gemeinsam in einem Spritzgießverfahren oder in einem Spritzgießverfahren mit anschließendem Vulkanisieren fest und unlösbar verbunden werden.

An dem von der Schwingungsmasse 12 beabstandeten Ende eines Dämpfungselementes 14 ist ein auf eine Aufnahme 22 des Gehäuses 16 abgestimmter Befestigungsbereich 24 angeordnet. Hier handelt es sich um eine vereinfachte Lösung in Bezug auf die Montage. Mittels dieses Befestigungsbereiches 24 und der Aufnahme 22 wird das Dämpfungselement 14 und damit die Schwingungsmasse 12 fest in dem Gehäuse 16 fixiert. Zusätzlich kann der Befestigungsbereich 24 in der Aufnahme 22 verklebt sein. Die Befestigung oder Anbindung kann auch mit einer beispielsweise konusförmigen Passung oder einer Befestigungsöffnung realisiert sein. Eine Befestigungsöffnung kann zum Beispiel dadurch geschaffen werden, dass eine Hülse umspritzt wird. Die Befestigung der Dämpfungselemente 14 an dem Gehäuse 16 ist derart ausgebildet, dass die Aufnahme 22 und damit auch der Befestigungsbereich 24 des Dämpfungselementes 14 vollständig im Inneren des Gehäuses 16 angeordnet ist. Somit ist keine Öffnung im Gehäuse 16 bzw. vorspringende Elemente an der Außenseite des Gehäuses 16 notwendig.

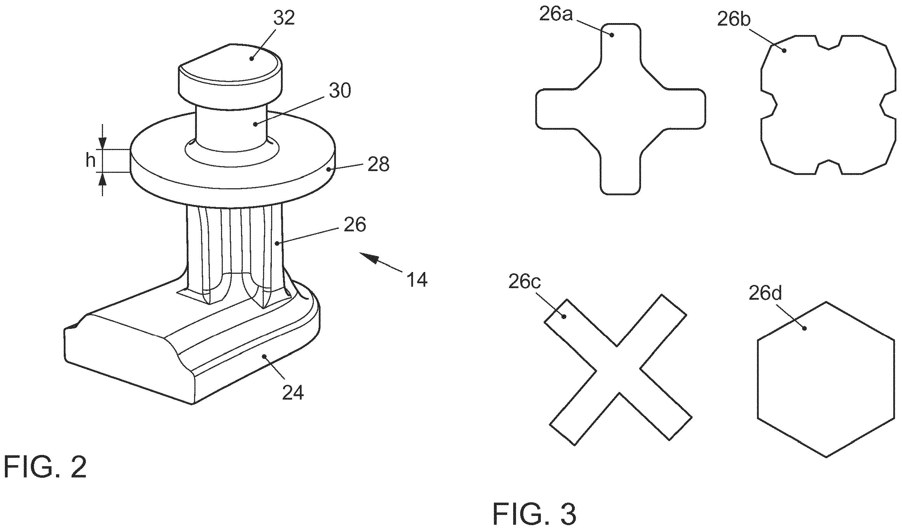

Anhand der Figuren 2 und 3 wird nun ein Dämpfungselement 14 exemplarisch beschrieben.

Das Dämpfungselement 14 hat einen Grundkörper 26, über dessen Länge oder axiale Erstreckung der Abstand zwischen der Schwingungsmasse 12 und dem Gehäuse 16 eingestellt wird. An einer, von der Schwingungsmasse 12 aus betrachteten, äußeren Ende befindet sich der Befestigungsbereich 24. Hier ist der Befestigungsbereich 24 wie ein Fußteil ausgebildet, welches in die Aufnahme 22 des Gehäuses 16 eingeschoben werden kann.

Im inneren Bereich des Dämpfungselementes 14 ist hier ein Flansch 28 vorgesehen. Der Grundkörper 26 geht in den Flansch 28 über, der im montierten Zustand dann an der Schmalseite 20 der Schwingungsmasse 12 anliegt. Der Flansch 28 hat eine Dicke oder Höhe h, über welche die Steifigkeit des Dämpfungselementes 14 alternativ eingestellt werden kann.

Auch über den Radius bzw. den Durchmesser des Flansches 28 lässt sich das Schwingungsverhalten beeinflussen und/oder die Anlage an der Schwingungsmasse 12 verbessern. Vorzugsweise entspricht der Durchmesser des Flansches 28 einer Höhe h der Schmalseite 20 bzw. des Schwingungsmasse 12. Falls der Durchmesser des Flansches 28 größer ist als die Höhe der Schwingungsmasse 12, wird ein Anschlagen der Schwingungsmasse 12 am Gehäuse verhindert.

An den Flansch 28 schließt sich ein Eingriffsbereich 30 an, der im befestigten Zustand in die Öffnung 18 der Schwingungsmasse 12 eingreift. Der Eingriffsbereich 30 ist in axialer Verlängerung zu dem Grundkörper 26 ausgebildet. Der Eingriffsbereich 30 kann auch Bestandteil des Grundkörpers 26 sein. In diesem Fall ist der Flansch 28 an den Grundkörper 26 angeformt. In der hier dargestellten Befestigungsvariante ist an dem Ende des Eingriffsbereichs 30, dessen Länge variiert werden kann, ein Vorsprung 32 vorgesehen. Dieser Vorsprung 32 kommuniziert mit einem Hinterschnitt in der Öffnung 18 der Schwingungsmasse 12. Dies ermöglicht eine stabile Verbindung zwischen der Schwingungsmasse 12 und dem Dämpfungselement 14 durch Einpressen des Dämpferelementes 14 in die Öffnung 18.

In Figur 3 sind verschiedene Querschnitte für den Grundkörper 26 des Dämpfungselementes 14 dargestellt. Über den Querschnitt des Grundkörpers 26 können Parameter wie Schwingungsverhalten, Torsionssteifigkeit und/oder Stabilität eingestellt werden. Über die Wahl des Querschnitts lässt sich weiterhin das Gewicht des Dämpfungselementes 14 und damit auch das Schwingungsverhalten des gesamten Schwingungsdämpfers 10 beeinflussen. Ein erster Querschnitt 26a zeigt einen verrundeten kreuzförmigen Querschnitt, wobei insbesondere im Kreuzungspunkt starke Verrundungen ausgebildet sind. Eine derartige Struktur schafft eine gute Stabilität bei geringem Materialeinsatz und somit geringem Gewicht. Der Grundkörper 26b weist einen im Wesentlichen ovalen Querschnitt auf, wobei symmetrisch angeordnet vier Einkerbungen oder Einschnitte vorgesehen sind. Dieser Querschnitt weist ebenfalls eine hohe Stabilität diesmal mit hohem Gewicht auf. Der Grundkörper 26c hat einen kreuzförmigen Querschnitt mit klar konturierten Kanten. Dieser Querschnitt hat ein minimales Gewicht bei verringerter Steifigkeit. Der Querschnitt des Grundkörpers 26d ist sechseckig ausgeführt. Hier ist wiederum eine hohe Steifigkeit mit einem hohen Gewicht gepaart.

Sämtliche Querschnitte sind so gestaltet, dass das Dämpfungselement 14 massiv ist, also aus einem Vollkörper ohne innere Ausnehmungen oder Hohlräume besteht. Das Dämpfungselement 14 ist ein extrudiertes oder gespritztes Teil, das hauptsächlich aus einem Polymer besteht. Die Dämpfungselemente 14 oder Federn halten zum einen der Schwingungsmasse 12 oder die Tilgermasse in einem bestimmten Abstand zu dem Gehäuse 16. Zum anderen übertragen die Dämpfungselemente 14 Schwingungen zwischen dem Gehäuse 16 bzw. einer Tragstruktur einerseits und der Schwingungsmasse 12 andererseits.

Das Dämpfungselement 14 kann beispielsweise auch als Schaumelement ausgebildet sein, welches eingelegt wird oder um dem die Schwingungsmasse 12 umspritzt wird. Der Füllungsgrad derartiger Schäume kann vollständig oder auch partiell realisiert sein. Derartige Schäume können zum Beispiel auf einer Elastomerbasis wie Silikon, PUR (Polyurethane) oder Ähnlichem basieren. Entsprechend kann auch schwammartiges Material verwendet werden. Die Schwingungsfrequenz des Systems kann dann die technischen Anforderungen an den Werkstoff definieren. Zwar sind derartige Schäume und schwammartige Materialen im Allgemeinen nicht als massive Werkstoffe angesehen, jedoch werden derartige Dämpfungselemente 14 im Sinne der Erfindung als massive Dämpfungselemente 14 bezeichnet. Im Sinne der Erfindung bedeutet der Begriff massiv, dass die Dämpfungselemente 14 aus vollem Werkstoff gefertigt sind und daher keine (großen) Öffnungen oder Hohlräume aufweisen. Die kleinen Zellöffnungen von Schäumen oder schwammartigen Materialien haben eine derart kleine Abmessung, dass sie bei dieser Betrachtung hier vernachlässigt werden können.

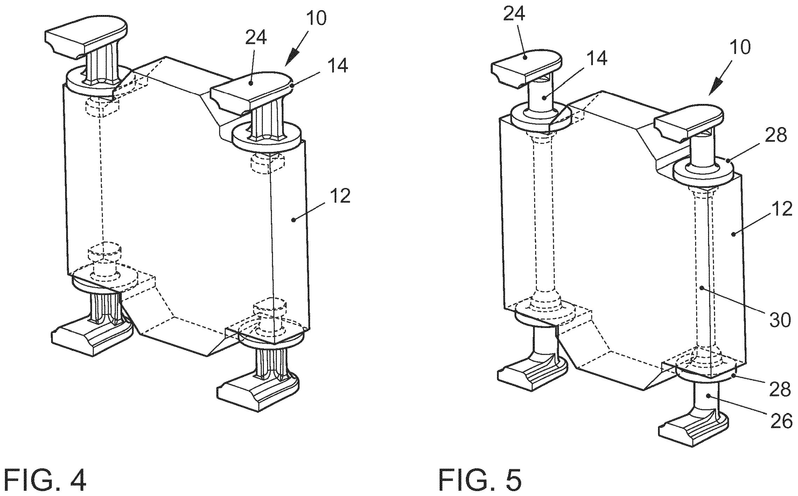

Die Figuren 4 und 5 zeigen weitere Ausführungsbeispiele des Schwingungstilgers 10, die ebenfalls eine einstückige Schwingungsmasse 12 aufweisen. Im Unterschied zu dem in Figur 1 dargestellten Schwingungstilger 10 haben die in den Figuren 4 und 5 dargestellten Schwingungstilger 10 kein Gehäuse zur Verbindung mit einem Strukturteil. Stattdessen wird der gesamte Schwingungsdämpfer 10 mittels der Befestigungsbereiche 24 der Dämpfungselemente 14 direkt an einer Struktur beispielsweise eines Fahrzeugsitzes oder einer Werkzeugmaschine befestigt. Für die in den Figuren 4 und 5 dargestellten fußförmigen Befestigungsbereiche 24 können dann an der Struktur entsprechende Aufnahmen vorgesehen sein, welche den Aufnahmen 22 des Gehäuses 16 in Figur 1 entsprechen.

Alternativ ist es möglich, dass die Befestigungsbereiche 24 auf die speziellen Gegebenheiten des Systems angepasst sind. Dazu können die Befestigungsbereiche 24 beispielsweise Löcher oder Ösen zum Zusammenwirken mit Stiften, Schrauben oder ähnlichen Befestigungsmitteln aufweisen. Andererseits könnte der Befestigungsbereich 24 eine Anlagefläche aufweisen, mittels der das Dämpfungselement 14 mit der Struktur verklebt wird.

Bei dem in Figur 4 dargestellten Schwingungstilger 10 sind die Dämpfungselemente 14 ausgebildet, wie in Figur 2 dargestellt ist. Entsprechend werden die Dämpfungselemente 14 mittels eines Pressvorganges mit den Öffnungen der Schwingungsmasse 12 verbunden. Die Abmessungen des Eingriffsbereichs 30 bzw. des Vorsprunges 32 des Dämpfungselementes 14 sind auf die Geometrie der Öffnung 18 der Schwingungsmasse 12 abgestimmt. So können die Schwingungseigenschaften und damit auch die Dämpfungseigenschaften des Schwingungstilgers 10 eingestellt werden. Beispielsweise kann vorgesehen sein, dass das Dämpfungselement 14 sich eher in einem gestreckten Zustand oder in einem gestauchten Zustand befindet, wodurch die Schwingungseigenschaften des Dämpfungselementes 14 und damit des Schwingungstilgers 10 verändert werden.

In Figur 5 ist eine weitere Variante des Schwingungstilgers 10 dargestellt. Hier hat der Schwingungstilger 10 lediglich zwei Dämpfungselemente 14, welche sich durch zwei Öffnungen der Schwingungsmasse 12 erstrecken. Die Länge der Öffnungen bzw. der Federaufnahme und die Länge des Dämpfungselementes 14 sind so ausgelegt, dass das Dämpfungselement 14 vor der Montage leicht gezogen wird und in der Öffnung positioniert wird. Nach der Positionierung sitzt das Dämpfungselement 14 durch die Zugkraftabnahme fest in der Schwingungsmasse 12. Durch die Vorspannung und/oder eine genaue Fertigung entsteht eine Passung zwischen dem Dämpfungselement 14 und der Schwingungsmasse 12, welche entlang der gesamten Kontaktfläche oder Kontaktflächen gleichmäßig vorhanden ist. Ein in Figur 5 dargestelltes Dämpfungselement 14 hat zwei Befestigungsbereiche 24 und auch zwei Flansche 28. Der zwischen zwei Flanschen 28 liegende Eingriffsbereich 30, der die beiden Flansche 28 verbindet, ist vorzugsweise genauso ausgebildet wie der Grundkörper 26 bzw. bildet den Grundkörper 26.

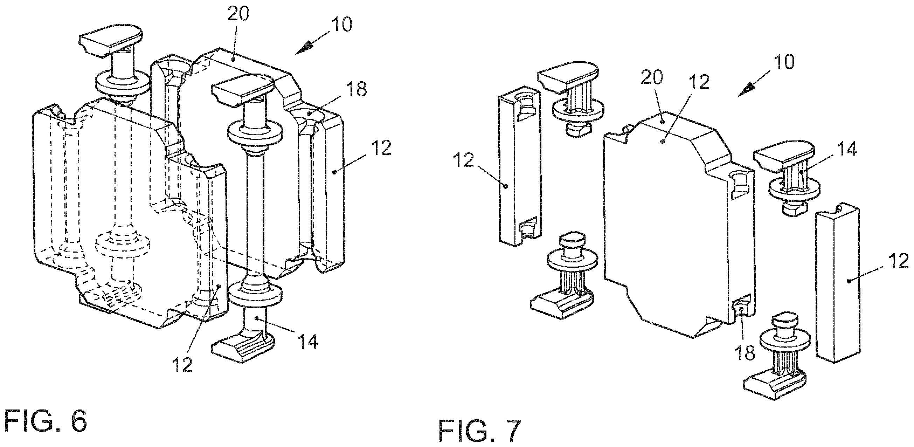

In Figur 6 ist eine weitere Variante des Schwingungstilgers 10 dargestellt. Während die Dämpfungselemente 14 den Dämpfungselementen aus Figur 5 entsprechen, ist die Schwingungsmasse 12 nun zweiteilig aufgebaut. Die Schwingungsmasse 12 ist mittig entlang der Längserstreckung der Schmalseite 20 in zwei Hälften geteilt. Entsprechend sind auch die Öffnungen 18 in zwei Teile aufgeteilt. Dies ermöglicht ein relativ einfaches Einlegen der dann unter Zug stehenden Dämpfungselemente 14 in die eine Hälfte der Schwingungsmasse 12. Die andere Hälfte der Schwingungsmasse 12 wird dann aufgelegt und mit dem ersten Teil verbunden, beispielsweise mittels Verschrauben oder Kleben.

In Figur 7 ist ein weiteres Ausführungsbeispiel des Schwingungstilgers 10 dargestellt. Während die Dämpfungselemente 14 den in Figur 4 dargestellten Dämpfungselementen 14 entsprechen, ist die Schwingungsmasse 12 nunmehr dreiteilig ausgebildet. Auch wie in Figur 6 dargestellt, verlaufen hier die Schnittachsen bzw. Trennlinien zwischen den einzelnen Teilen der Schwingungsmasse 12 durch die Öffnungen 18. Hier ist die Trennlinie zwischen zwei Teilen der Schwingungsmasse 12 senkrecht zu der Schmalseite 20 angeordnet, wobei dann zwei Öffnungen 18 vorzugsweise mittig geschnitten werden. Auch hier können die Dämpfungselemente 14, welche bei einer einteiligen Schwingungsmasse 12 verpresst werden, einfach in eine Hälfte der Öffnung 18 eingelegt werden. Anschließend wird das andere Teil der Schwingungsmasse 12 mit der zweiten Hälfte der Öffnung 18 durch Schrauben, Kleben oder Ähnliches an dem ersten Teil der Schwingungsmasse 12 befestigt, wodurch die Dämpfungselemente 14 festgehalten werden. Durch die Wahl von unterschiedlichen Materialien für die Teile der Schwingungsmasse 12 kann das Schwingungsverhalten und damit das Dämpfungsverhalten des Schwingungsdämpfers 10 verändert werden.

Die zuvor beschriebenen Ausführungsbeispiele können frei miteinander kombiniert werden. Insbesondere können die unterschiedlichen Schwingungsmassen 12, das heißt die einteilige, zweiteilige oder dreiteilige Schwingungsmasse 12, jeweils mit den unterschiedlichen Varianten der Dämpfungselemente 14 frei kombiniert werden.

### Bezugszeichenliste

- 10: Schwingungstilger
- 12: Schwingungsmasse
- 14: Dämpfungselement
- 16: Gehäuse
- 18: Öffnungen
- 20: Schmalseite
- 22: Aufnahme
- 24: Befestigungsbereich
- 26: Grundkörper
- 28: Flansch
- 30: Eingriffsbereich
- 32: Vorsprung
- h: Höhe

## Patentansprüche

1. Schwingungstilger für einen Fahrzeugsitz mit einer Schwingungsmasse (12) und mit mehreren massiv ausgebildeten die Schwingungsmasse (12) tragenden, elastischen Dämpfungselementen (14), deren Grundkörper (26) in einem befestigten Zustand an den einen Enden mit einem Eingriffsbereich (30) versehen sind, die in Öffnungen (18) der Schwingungsmasse (12) eingreifen und mit ihren anderen von der Schwingungsmasse (12) beabstandeten Enden mit einem Befestigungsbereich (24) versehen sind, wobei die Befestigungsbereiche (24) in einem befestigten Zustand mit einer Struktur des Fahrzeugsitzes in Verbindung stehen oder mit einem mit der Struktur des Fahrzeugsitzes in Verbindung stehenden Gehäuse (16) in Verbindung stehen,
**dadurch gekennzeichnet, dass**
die Befestigungsbereiche (24) der Dämpfungselemente (14) mit ihren anderen von der Schwingungsmasse (12) beabstandeten Enden als Fußteile ausgebildet sind , die im befestigten Zustand in Aufnahmen in der Struktur des Fahrzeugsitzes oder in Aufnahmen (22) des mit der Struktur des Fahrzeugsitzes in Verbindung stehenden Gehäuses (16) eingeschoben sind , während die Eingriffsbereiche (30) als Vorsprung (32) ausgebildet sind, die in die mit einem Hinterschnitt versehenen Öffnungen (18) der Schwingungsmasse (12) eingreifen, wobei sich an die Eingriffsbereiche (32) Flansche (28) anschließen, die an den Grundkörper (26) angeformt sind, wobei die Flansche (28) an den Kontaktflächen zwischen dem Dämpfungselement (14) und der Schwingungsmasse (12) Anbindungsflächen bilden.

2. Schwingungstilger nach Anspruch 1, **dadurch gekennzeichnet, dass** vier Dämpfungselemente (14) vorgesehen sind und dass vier Öffnungen (18) paarweise gegenüberliegend an Schmalseiten (20) der Schwingungsmasse (12) angeordnet sind.

3. Schwingungstilger nach Anspruch 1, **dadurch gekennzeichnet, dass** zwei Dämpfungselemente (14) vorgesehen sind und dass zwei die Schwingungsmasse (12) durchdringende Öffnungen (18) vorgesehen sind.

4. Schwingungstilger nach einem der vorhergehenden Ansprüche, **dadurch gekennzeichnet, dass** die Schwingungsmasse (12) oder der Dämpferkörper (12) und die Dämpfungselemente (14) einstückig ausgebildet sind.

5. Schwingungstilger nach einem der Ansprüche 1 bis 4, **dadurch gekennzeichnet, dass** die Schwingungsmasse (12) mehrteilig ausgebildet ist, wobei die Öffnungen (18) im Bereich von Übergängen von Teilen der Schwingungsmasse (12) angeordnet sind.

6. Schwingungstilger nach einem der vorhergehenden Ansprüche, **dadurch gekennzeichnet, dass** die Schwingungsmasse (12) und die Dämpfungselemente (14) mittels einer Pressverbindung verbunden sind.

7. Fahrzeugsitz mit einer Sitztragstruktur, **dadurch gekennzeichnet, dass** ein Schwingungstilger (10) nach einem der Ansprüche 1 bis 6 mit der Sitztragstruktur verbunden ist.

8. Kraftfahrzeug mit mindestens einem Sitz nach Anspruch 7.

## Claims

1. Tuned mass damper for a vehicle seat, comprising a vibrating mass (12) and comprising a plurality of solidly formed elastic damping elements (14) carrying the vibrating mass (12), the main bodies (26) of which when fixed are provided at one end with an engagement region (30), which engage in openings (18) in the vibrating mass (12) and, with their other ends at a distance from the vibrating mass (12), are provided with a fastening region (24), wherein the fastening regions (24) when fixed are connected to a structure of the vehicle seat or are connected to a housing (16) that is connected to the structure of the vehicle seat,
**characterized in that**
the fastening regions (24) of the damping elements (14) are formed with their other ends, at a distance from the vibrating mass (12), as foot parts which, when fixed, are pushed into receptacles in the structure of the vehicle seat or in receptacles (22) in the housing (16) that is connected to the structure of the vehicle seat, while the engagement regions (30) are formed as protrusions (32), which engage in the openings (18) in the vibrating mass (12) that are provided with an undercut, wherein the engagement regions (32) are adjoined by flanges (28) which are moulded onto the main body (26), wherein the flanges (28) form attachment surfaces on the contact surfaces between the damping element (14) and the vibrating mass (12).

2. Tuned mass damper according to Claim 1, **characterized in that** four damping elements (14) are provided, and **in that** four openings (18) are arranged oppositely in pairs or narrow sides (20) of the vibrating mass (12) .

3. Tuned mass damper according to Claim 1, **characterized in that** two damping elements (14) are provided, and **in that** two openings (18) penetrating the vibrating mass (12) are provided.

4. Tuned mass damper according to one of the preceding claims, **characterized in that** the vibrating mass (12) or the damper body (12) and the damping elements (14) are formed in one piece.

5. Tuned mass damper according to one of Claims 1 to 4, **characterized in that** the vibrating mass (12) is formed of many parts, wherein the openings (18) are arranged in the region of transitions between parts of the vibrating mass (12).

6. Tuned mass damper according to one of the preceding claims, **characterized in that** the vibrating mass (12) and the damping elements (14) are connected by means of a press connection.

7. Vehicle seat having a seat support structure, **characterized in that** a tuned mass damper (10) according to one of Claims 1 to 6 is connected to the seat support structure.

8. Motor vehicle having at least one seat according to Claim 7.

## Revendications

1. Amortisseur de vibrations destiné à un siège de véhicule, ledit amortisseur de vibrations comprenant une masse oscillante (12) et plusieurs éléments d'amortissement élastiques (14) qui sont solides, qui supportent la masse oscillante (12) et dont le corps de base (26) est pourvu à des premières extrémités, à l'état fixé, de zones d'engagement (30) qui s'engagent dans des ouvertures (18) de la masse oscillante (12) et qui sont pourvues de zones de fixation (24) à leurs autres extrémités distantes de la masse oscillante (12), les zones de fixation (24) étant à l'état fixé en liaison avec une structure de véhicule ou étant en liaison avec un boîtier (16) qui est en liaison avec la structure du siège de véhicule,
**caractérisé en ce que**
les zones de fixation (24) des éléments d'amortissement (14) sont conçues avec leurs autres extrémités distantes de la masse oscillante (12) comme des parties de pied qui sont insérées, à l'état fixé, dans des logements de la structure du siège du véhicule ou dans des logements (22) du boîtier (16) qui est en liaison avec la structure du siège de véhicule, tandis que les zones d'engagement (30) sont conçues comme une saillie (32) qui s'engage dans les ouvertures (18), pourvues d'une contre-dépouille, de la masse oscillante (12), les zones d'engagement (32) se raccordant à des brides (28) qui sont formées sur le corps de base (26), les brides (28) formant des surfaces de liaison au niveau des surfaces de contact entre l'élément d'amortissement (14) et la masse oscillante (12).

2. Amortisseur de vibrations selon la revendication 1, **caractérisé en ce que** quatre éléments d'amortissement (14) sont prévus et **en ce que** quatre ouvertures (18) sont disposées par paires en vis-à-vis sur des petits côtés (20) de la masse oscillante (12).

3. Amortisseur de vibrations selon la revendication 1, **caractérisé en ce que** deux éléments d'amortissement (14) sont prévus et **en ce que** deux ouvertures (18) traversant la masse oscillante (12) sont prévues.

4. Amortisseur de vibrations selon l'une des revendications précédentes, **caractérisé en ce que** la masse oscillante (12) ou le corps d'amortissement (12) et les éléments d'amortissement (14) sont formés d'une seule pièce.

5. Amortisseur de vibrations selon l'une des revendications 1 à 4, **caractérisé en ce que** la masse oscillante (12) est réalisée en plusieurs parties, les ouvertures (18) étant disposées au niveau des transitions de parties de la masse oscillante (12).

6. Amortisseur de vibrations selon l'une des revendications précédentes, **caractérisé en ce que** la masse oscillante (12) et les éléments d'amortissement (14) sont reliés au moyen d'une liaison à sertir.

7. Siège de véhicule comprenant une structure de support de siège, **caractérisé en ce qu'**un amortisseur de vibrations (10) selon l'une des revendications 1 à 6 est relié à la structure de support de siège.

8. Véhicule automobile comprenant au moins un siège selon la revendication 7.
